# EUROPÄISCHE PATENTANMELDUNG

(11) **EP 1 946 971 A2**
(43) Veröffentlichungstag der Anmeldung: **23.07.2008**
(21) Anmeldenummer: 07122968.6
(22) Anmeldetag: 12.12.2007
(51) Int. Cl.: B60R 11/02

(54) **Konsoleneinbauelement für ein Fahrzeug**

(30) Priorität: 17.01.2007 DE 102007002409
(71) Anmelder: Ford Global Technologies, LLC, A subsidary of Ford Motor Company, Dearborn, MI 48126 (US)
(72) Erfinder: Stephan, Jörg, 50259, Pulheim (DE)
(74) Vertreter: Dörfler, Thomas

(57) **Zusammenfassung**

Konsoleneinbauelement (1, 101) für ein Fahrzeug, insbesondere für die Mittelkonsole, mit einer schließ- und öffenbaren Abdeckung (2, 102) für eine Öffnung (3, 103), innerhalb derer ein Staufach (5, 105) für eine sichere Aufnahme unterschiedlicher elektronischer Geräte vorgesehen ist, das mindestens im Bereich eines oberen Randes Fixierelemente (16, 116) aufweist, die das jeweilige Gerät im Staufach (5, 105) in Position halten.

## Beschreibung

Die Erfindung betrifft ein Konsoleneinbauelement für ein Fahrzeug mit einem Staufach nach dem Oberbegriff des Anspruchs 1.

Tragbare elektronische Geräte aus dem Bereich der Kommunikations- oder Unterhaltungselektronik, beispielsweise tragbare MP3-Abspielgeräte, PDAs, Mobiltelefone usw., werden zunehmend auch während der Fahrt in Kraftfahrzeugen verwendet, z. B. zum Abspielen von Musik, zum Telefonieren usw.

Während der Verwendung wird das elektronische Gerät in der Regel auf dem Beifahrersitz oder auf einer Ablage im Innenraum des Kraftfahrzeuges angeordnet. In Folge der Fahrbewegung des Kraftfahrzeuges kann es dazu kommen, dass das elektronische Gerät von dem Beifahrersitz oder der Ablage herunterfällt, was zu einer Ablenkung und gegebenenfalls auch Behinderung des Fahrers führen kann.

Dabei besteht der zunehmende Wunsch, die elektronischen Geräte in die vorhandene Bordelektronik des Fahrzeugs, wie Bordcomputer, Autoradio usw. zu integrieren bzw. anzukoppeln, um so die Steuerung und Verwendung, z. B. die Übertragung von Audiodaten an das Autoradio zu ermöglichen.

Bekannt ist es z.B. MP3-Abspielgeräte mittels eines Audiokabels an ein vorhandenes Autoradio zu koppeln. Das Ablegen eines mit dem Autoradio beim Abspielen der Musikdaten über ein Audiokabel verbundenen elektronischen Gerätes auf dem Beifahrersitz oder auf/in einer Ablage im Inneren des Kraftfahrzeuges wird jedoch aufgrund des freiliegenden Audiokabels als wenig ästhetisch ansprechend empfunden und birgt Sicherheitsrisiken.

Aus dem Stand der Technik sind Haltevorrichtungen für elektronische Geräte bekannt. Diese sind jedoch gerätespezifisch ausgebildet und ermöglichen lediglich die Halterung und Aufnahme eines bestimmten elektronischen Gerätes, wobei die Haltevorrichtung einen an das Gehäuse des elektronischen Gerätes angepassten Haltebereich aufweist und die Halterung des elektronischen Gerätes lediglich über das Gehäuse erfolgt. Darüber hinaus weisen die bekannten Haltevorrichtungen hohe Anschaffungskosten auf und müssen bei einem Gerätewechsel ausgetauscht werden.

Aus der DE 195 46 686 B4 ist ein Kraftfahrzeug mit einer Bordspannungsersorgung bekannt, wobei ein Stromversorgungskabel für Kleingeräte vorgesehen ist, das einen Multistecker aufweist, im Betrieb mindestens eine Spannung im Bereich von 1,5 und 9 Volt liefert und im Bereich der Mittelkonsole hinten, der Seitenverkleidung hinten und/oder der Hutablage verbunden ist.

Die DE 20 2005 015 757 U1 offenbart eine Haltevorrichtung ausgebildet zur Halterung und ortsfesten Anordnung eines transportablen elektronischen Gerätes, insbesondere eines transportablen MP3-Abspielgerätes, im Personenraum eines Kraftfahrzeuges, mit einem Befestigungsteil zur Befestigung der Haltevorrichtung mit dem Kraftfahrzeug und mit einem Halteteil für das elektronische Gerät, wobei das Halteteil wenigstens einen Haltebereich aufweist und wobei der Haltebereich zur lösbaren formschlüssigen und/oder reibschlüssigen Verbindung mit wenigstens einer Datenübertragungsschnittstelle des elektronischen Gerätes ausgebildet ist.

Die US 6,608,399 B2 beschreibt eine intelligente universelle Kupplungsvorrichtung (docking station) für ein Fahrzeug, das zur Aufnahme einer Reihe von modularen gleichförmigen Einheiten ausgestaltet ist, die jeweils unterschiedliche elektronische Funktionen über die Kupplungsvorrichtung im Fahrzeug bereitstellen. Die Kupplungsvorrichtung wiederum ist entweder drahtgebunden oder drahtlos mit der Bordelektronik verbunden.

Aufgabe der Erfindung ist es, ein Staufach für ein Fahrzeug bereitzustellen, das eine sichere Aufnahme unterschiedlicher elektronischer Geräte ermöglicht. Zudem sollten dabei möglichst eine Stromversorgung der Geräte und eine elektronische Anbindung an das Fahrzeug möglich sein. Dabei soll das Staufach auf einfache Weise in dem Fahrzeug anbringbar bzw. einbaubar sein.

Die Ausgabe wird durch das in Anspruch 1 angegebene Konsoleneinbauelement gelöst.

Indem das Konsoleneinbauelement für ein Fahrzeug, insbesondere für die Mittelkonsole, mit einem Staufach für eine sichere Aufnahme unterschiedlicher elektronischer Geräte vorgesehen ist, wobei das Staufach Fixierelemente aufweist, die das jeweilige Gerät im Staufach in Position halten, ist es möglich, eine universelle Möglichkeit zur Aufnahme unterschiedlicher elektronischer Geräte auf einfache Weise bereitzustellen. Dabei ermöglichen die Fixierelemente ein Fixieren des jeweiligen elektronischen Geräts im Staufach unabhängig von dessen äußerer Formgebung.

In bevorzugten Ausführungsformen sind die Fixierelemente als Gummilippe oder - lippen oder als Schaumstoffprofile ausgebildet. Bevorzugt ist es dabei, wenn die Fixierelemente vom Staufachrand, insbesondere vom oberen Staufachrand her in das Innere des Staufachs ragen. Wenn ein Gerät in das Staufach eingeschoben wird, drücken die Fixierelemente das Gerät gegen die Staufachwand. Durch die resultierende Reibung wird eine Art "Widerhakeneffekt" erzeugt, wodurch das Gerät gegen Bewegung gesichert wird. Die Fixierelemente können durch jedes geeignete elastische Profil gebildet werden, welches die hier genannte Aufgabe der Fixierung des Gerätes im Staufach bewerkstelligt.

Das Staufach kann im Querschnitt beliebige Ausmaße und Gestalt aufweisen. Sinnvoll ist es jedoch, wenn das Staufach einen im Wesentlichen rechteckigen Querschnitt aufweist. Dieser sollte dabei an übliche Geräteabmessungen angepasst sein, sprich eine bestimmte Auswahl Geräte mit gängigen Größen aufnehmen können, insbesondere einen i-Pod.

In einer weiteren Ausführungsform ist im Bereich des oberen Randes des Staufachs ein Stromversorgungsanschluss angeordnet. Somit kann das elektronische Gerät unabhängig von der eigenen Stromversorgung über das Bordnetz gespeist werden, was eine längere Betriebsdauer und ein Wiederaufladen der Akkumulatoren erlaubt.

Günstigerweise ist der Stromversorgungsanschluss mit einem Multistecker oder einer Multibuchse versehen, so dass unterschiedliche Geräte ansteckbar sind bzw. durch einen Adaptertausch verbindbar sind.

In einer weiteren Ausführungsform ist im Bereich des oberen Randes des Staufachs ein Signalverbindungsanschluss angeordnet, so dass auf einfache Weise eine Anbindung des Geräts an die Fahrzeugelektronik erfolgen kann. Hierbei kann es sich um einen Multistecker handeln, der optional mit einem ausziehbaren Kabel angebunden sein kann. Somit kann das Gerät unabhängig von der Ausrichtung und der Anordnung seines Verbindungsanschlusses verbunden werden. Besonders günstig ist es, wenn das ausziehbare Kabel über einen Kabelaufrollmechanismus selbstaufrollend ausgestaltetet ist. Andererseits kann der Signalverbindungsanschluss auch eine Buchse sein. Dann kommen als Buchse insbesondere eine USB-Buchse oder eine AUX-Buchse für Klinkenstecker in Betracht.

Zusätzlich kann das Konsoleneinbauelement eine Schalteranordnung aufweisen, die eine Steuerung des elektronischen Geräts ermöglicht. Somit kann das jeweilige Gerät einfacher bedient werden als über seine eigenen Bedienelemente.

Ferner kann eine gummierte Auflage mit Längsrippen zur CD Aufnahme vorgesehen sein, um CD's aufzubewahren.

Weitere Einzelheiten, Ausgestaltungen und Vorteile ergeben sich aus der nachfolgenden Beschreibung eines Ausführungsbeispiels anhand der Zeichnung, in der
- Fig. 1: eine perspektivische Ansicht eines Konsoleneinbauelements von schräg oben zeigt;
- Fig. 2: einen Schnitt entlang der Linie A-A in Fig. 1 zeigt und
- Fig. 3: eine perspektivische Ansicht eines weiteren Konsoleneinbauelements von schräg oben zeigt.

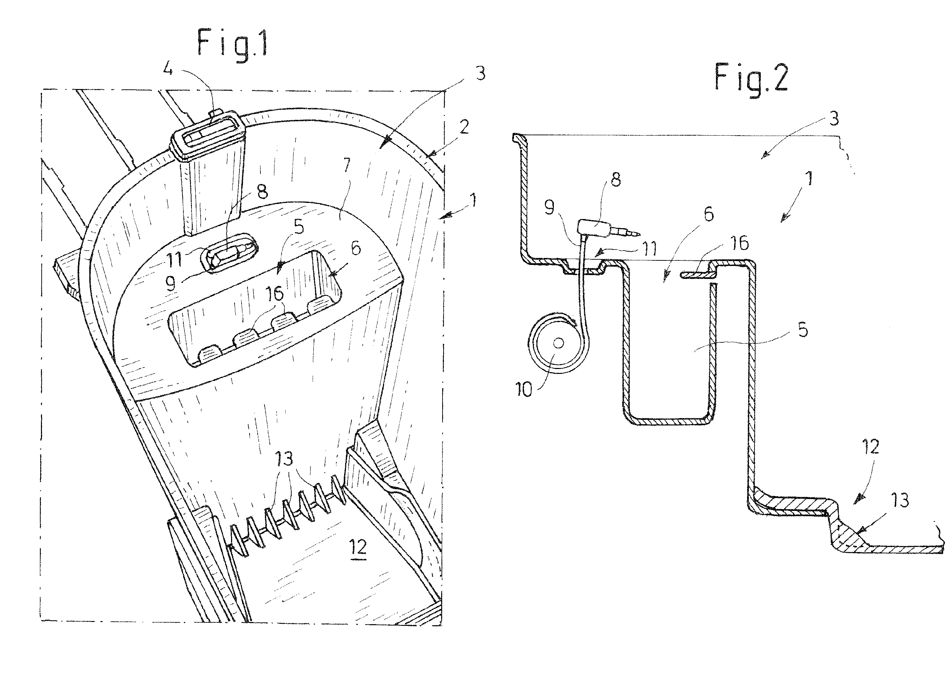

Die in den Figuren 1 und 2 bzw. 3 dargestellten Konsoleneinbauelemente entsprechen sich im Wesentlichen, so dass für sich entsprechende Teile sich um 100 unterscheidende Bezugszeichen verwendet werden und lediglich auf Unterschiede eingegangen wird.

In den Figuren 1 und 2 ist ein erstes Konsoleneinbauelement 1 für ein Fahrzeug dargestellt. Es eignet sich für den Einbau in die Mittelkonsole und weist eine schließ- und öffenbare Abdeckung 2 für eine Öffnung 3 auf. Bei der nicht dargestellten Abdeckung handelt es sich vorzugsweise um eine um ein Scharnier auf- und zuklappbare Armauflage, von der nur ein Teil der Verriegelung 4sichtbar ist.

Innerhalb der Öffnung 3 ist ein Staufach 5 für eine sichere Aufnahme unterschiedlicher elektronischer Geräte vorgesehen. Im vorliegenden Fall eignet sich das Staufach 5 besonders für die Aufnahme von MP3-Abspielgeräten flacher Bauform, wie i-Pods ® von der Firma Apple. Das Staufach 5 besitzt dazu einen im Wesentlichen rechteckigen Querschnitt und eine entsprechende Tiefe. Um die Tiefe bereitzustellen und eine angenehme Bedienhöhe zu erreichen, ist die Konsole im Bereich des Staufachs 5 turmartig erhöht.

Im Bereich eines oberen Randes des Staufachs 5 sind Fixierelemente 16 vorgesehen, die das jeweilige Gerät im Staufach in Position halten. Es handelt sich dabei um Gummilippen 16 , die vom Staufachrand her in das Innere des Staufachs ragen und zwar so weit, nämlich etwa ein Drittel, dass das jeweilige Gerät aufgrund von Reibung und Anpressdruck gesichert in dem Staufach 5 gehalten wird.

Um die Öffnung 6 des Staufachs 5 herum ist eine plattformartige Fläche 7 ausgebildet, so dass im Bereich um den oberen Rand des Staufachs 5 ein Multistecker 8 mit einem ausziehbaren Kabel 9 angeordnet ist, das über einen Kabelaufrollmechanismus 10 selbstaufrollend ausgestaltetet ist. Der Stecker 8 kann somit am Kabel 9 herausgezogen werden, um das Gerät unabhängig von der Position der entsprechenden Buchse mit dem Gerät zur Signalverbindung zu verbinden, um die Audiodaten über das Autoradio abzuspielen. Anschließend spannt sich das Kabel 9 über den Mechanismus 10 von selbst.

In der Fläche 7 ist für den Multistecker 8 eine Einbuchtung 11 vorgesehen, so dass er bei nicht Verwendung nicht über die Fläche 7 hervorsteht.

Zusätzlich umfasst das Konsoleneinbauelement eine gummierte Auflage 12 mit Längsrippen 13 zur CD Aufnahme, die in Fahrtrichtung hinter und unterhalb des Staufachs 5 bzw. der turmartigen Erhöhung angeordnet ist.

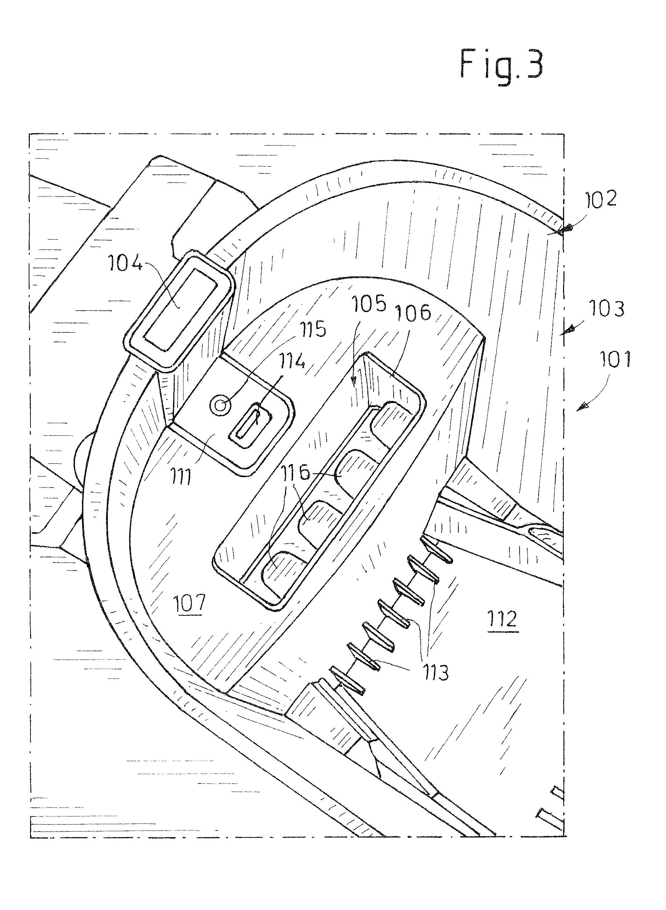

Im Unterschied zu der soeben besprochenen Konsole der Figuren 1 und 2 weist die Konsole der Figur 3 als Signalverbindungsanschluss eine USB-Buchse 114 und eine AUX-Buchse 115 für Klinkenstecker auf, die eine Verbindung des MP3-Abspielgerätes wahlweise über geeignete Kabel erlauben.

### Bezugszeichenliste

- 1, 101: Konsoleneinbauelement
- 2, 102: Abdeckung
- 3, 103: Öffnung
- 4, 104: Teil der Verriegelung
- 5, 105: Staufach
- 6, 106: Öffnung
- 7, 107: Fläche
- 8: Multistecker
- 9: Kabel
- 10: Kabelaufrollmechanismus
- 11, 111: Einbuchtung
- 12, 112: Auflage
- 13, 113: Längsrippen
- 114: USB-Buchse
- 115: AUX-Buchse für Klinkenstecker
- 16, 116: Fixierelemente, Gummilippen

## Patentansprüche

1. Konsoleneinbauelement (1, 101) für ein Fahrzeug, insbesondere für die Mittelkonsole, mit einem Staufach (5, 105) für eine sichere Aufnahme unterschiedlicher elektronischer Geräte, wobei das Staufach (5, 105) Fixierelemente (16, 116) aufweist, die das jeweilige Gerät im Staufach (5, 105) in Position halten.

2. Konsoleneinbauelement nach Anspruch 1, **dadurch gekennzeichnet, dass** die Fixierelemente (16, 116) mindestens im Bereich eines oberen Randes des Staufaches (5, 105) angeordnet sind.

3. Konsoleneinbauelement nach Anspruch 1, **dadurch gekennzeichnet, dass** die Fixierelemente (16, 116) als Gummilippe oder -lippen ausgebildet sind.

4. Konsoleneinbauelement nach Anspruch 1 oder 2, **dadurch gekennzeichnet, dass** die Fixierelemente als Schaumstoffprofile ausgebildet sind.

5. Konsoleneinbauelement nach einem der vorherigen Ansprüche, **dadurch gekennzeichnet, dass** die Fixierelemente (16, 116) vom Staufachrand her in das Innere des Staufachs ragen.

6. Konsoleneinbauelement nach einem der vorhergehenden Ansprüche, **dadurch gekennzeichnet, dass** das Staufach einen im wesentlichen rechteckigen Querschnitt aufweist.

7. Konsoleneinbauelement nach einem der vorhergehenden Ansprüche, **dadurch gekennzeichnet, dass** im Bereich des oberen Randes des Staufachs (5, 105) ein Stromversorgungsanschluss angeordnet ist.

8. Konsoleneinbauelement nach Anspruch 7, **dadurch gekennzeichnet, dass** der Stromversorgungsanschluss mit einem Multistecker oder einer Multibuchse versehen ist.

9. Konsoleneinbauelement nach einem der vorhergehenden Ansprüche, **dadurch gekennzeichnet, dass** im Bereich des oberen Randes des Staufachs ein Signalverbindungsanschluss (8, 114, 115) angeordnet ist.

10. Konsoleneinbauelement nach Anspruch 9, **dadurch gekennzeichnet, dass** der Signalverbindungsanschluss ein Multistecker (8) ist.

11. Konsoleneinbauelement nach Anspruch 10, **dadurch gekennzeichnet, dass** der Multistecker (8) mit einem ausziehbaren Kabel (9) angebunden ist.

12. Konsoleneinbauelement nach Anspruch 11, **dadurch gekennzeichnet, dass** das ausziehbare Kabel (9) über einen Kabelaufrollmechanismus (10) selbstaufrollend ausgestaltetet ist.

13. Konsoleneinbauelement nach Anspruch 9, **dadurch gekennzeichnet, dass** der Signalverbindungsanschluss eine Buchse (114, 115) ist.

14. Konsoleneinbauelement nach Anspruch 13, **dadurch gekennzeichnet, dass** die Buchse eine USB-Buchse (114) oder eine AUX-Buchse (115) für Klinkenstecker ist.

15. Konsoleneinbauelement nach einem der Ansprüche 9 bis 14, **dadurch gekennzeichnet, dass** eine Schalteranordnung vorgesehen ist, die eine Steuerung des elektronischen Geräts ermöglicht.

16. Konsoleneinbauelement nach einem der vorhergehenden Ansprüche, **dadurch gekennzeichnet, dass** eine gummierte Auflage (12, 112) mit Längsrippen zur CD Aufnahme vorgesehen ist.

17. Konsoleneinbauelement nach einem der vorhergehenden Ansprüche, **dadurch gekennzeichnet, dass** eine schließ- und öffenbaren Abdeckung (2, 102) für eine Öffnung (3, 103), innerhalb der sich das Staufach (5, 105) befindet, vorgesehen ist.
